# EUROPÄISCHE PATENTSCHRIFT

(11) **EP 2 087 583 B1**
(45) Veröffentlichungstag und Bekanntmachung des Hinweises auf die Patenterteilung: **19.05.2010**
(21) Anmeldenummer: 07819311.7
(22) Anmeldetag: 25.10.2007
(51) Int. Cl.: H02P 3/26, B60L 7/10, B60L 7/16, B60L 7/24, B60T 8/1761

(54) **TRAKTIONSANTRIEB EINES SCHIENENFAHRZEUGS ZUM ANTREIBEN UND ZUM GENERATORISCHEN BREMSEN MIT LASTKORREKTUR**
TRACTION DRIVE OF A RAIL VEHICLE FOR DRIVING AND GENERATIVE BRAKING WITH LOAD CORRECTION
ENTRAÎNEMENT PAR TRACTION POUR ENTRAÎNER ET FREINER ÉLECTRIQUEMENT UN VÉHICULE SUR RAILS AVEC CORRECTION DE CHARGE

(30) Priorität: 31.10.2006 DE 102006051319
(43) Veröffentlichungstag der Anmeldung: 12.08.2009
(73) Patentinhaber: KNORR-BREMSE Systeme für Schienenfahrzeuge GmbH, 80809 München (DE)
(72) Erfinder: HÄHLE, Falk, 82110 Germering (DE); FRIESEN, Ulf, 85579 Neubiberg (DE); SCHMUCKER, Josef, 82049 Pullach (DE)
(74) Vertreter: Mattusch, Gundula
(86) Internationale Anmeldenummer: PCT/EP2007/009259
(87) Internationale Veröffentlichungsnummer: WO 2008/052694

(56) Entgegenhaltungen:
- EP-A- 0 704 961
- WO-A-03/050940
- DE-A1-102004 032 679
- DE-A1-102004 032 680

## Beschreibung

### Stand der Technik

Die Erfindung geht aus von einem Traktionsantrieb gemäß dem Oberbegriff von Anspruch 1 sowie von einer Einrichtung zur Lastkorrektur beim generatorischen Bremsen gemäß dem Oberbegriff von Anspruch 7.

Ziel in der Ausrüstung von Schienenfahrzeugen ist es, immer effektivere und leichtere Antriebsmaschinen einzusetzen. Als Standardantriebsmaschine wird heute die umrichtergespeiste Asynchronmaschine verwendet. Diese Maschine bietet aber wenig Potential zur Weiterentwicklung in Bezug auf Masseverringerung und Drehmomentdichte und bedingt in ihrer Anwendung bei Schienenfahrzeugen meist ein Getriebe. Deswegen sind derzeit immer mehr Bestrebungen zu erkennen, permanent erregte Synchronmaschinen als Fahrzeugantriebe zu entwickeln und einzusetzen. Diese Maschinenart ermöglicht durch ihre hohe Drehmomentdichte die Realisierung von Direktantrieben und erzielt vor allem durch den Entfall des Getriebes eine sehr hohe Reduzierung der Masse des Antriebsstrangs.

Die permanent erregte Synchronmaschine weist auf Grund ihrer permanenten Erregung einige Besonderheiten im Vergleich zur Asynchrontechnik auf. So ist es z.B. möglich, bei einer rotierenden Maschine zusätzlich zum umrichtergeregelten Generatorbetrieb mit rein passiven Bauteilen eine Bremswirkung zu erzielen. Die durch eine permanent erregte Synchronmaschine erzeugte Bremswirkung durch eine Beschaltung von Bremswiderständen ist aus der DE 101 60 612 A1 bekannt.

Bei der Aufschaltung der rotierenden permanent erregten Synchronmaschine mit Bremswiderständen ergibt sich in Abhängigkeit von der Drehzahl des Synchronmotors und damit auch von der Fahrzeuggeschwindigkeit eine charakteristische Momenten- bzw. Kraftkennlinie, die im weiteren auch als natürliche Bremskennlinie bezeichnet wird. Diese Bremskennlinie besitzt im Verlauf über der Drehzahl/Geschwindigkeit ein Maximum.

Wünschenswert bei der Anwendung der generatorischen Bremswirkung eines permanent erregten Synchronmotors wäre eine lastabhängige Steuerung der Bremskraft bzw. des Bremsmoments.

Die gattungsbildende DE 10 2004 032 680 A1 offenbart eine Motorbremse für ein elektrisch angetriebenes Fahrzeug, mit einer permanent erregten Synchronmaschine, wobei die Klemmen der Synchronmaschine über Schalter mit ein Bremsmoment erzeugenden Einrichtungen in Verbindung stehen, die Bremswiderstände und hierzu parallel geschaltete Kondensatoren beinhalten, um das Bremsmoment zu erhöhen.

Der Erfindung liegt die Aufgabe zugrunde, einen Traktionsantrieb der eingangs erwähnten Art derart weiter zu bilden, dass auf einfache und kostengünstige Weise eine lastabhängige Anpassung der Bremskraft möglich ist. Weiterhin soll eine entsprechende Einrichtung zur Lastkorrektur zur Verfügung gestellt werden.

Erfindungsgemäß wird diese Aufgabe durch die Merkmale der Patentansprüche 1 und 7 gelöst.

### Offenbarung der Erfindung

Die dem permanent erregten Synchronmotor zum generatorischen Bremsen zugeschalteten Lastschaltung ist derart ausgeführt und/oder gesteuert, dass die Kenngrößen der Lastschaltung abhängig von der Beladung des Schienenfahrzeugs oder des Schienenfahrzeugzuges veränderbar sind, wobei die Lastschaltung Widerstände und Induktivitäten und/oder Kapazitäten aufweist.

Die Erfindung basiert dann auf dem Gedanken, dass ein Aktor eine Schalteinrichtung beinhaltet, welche die Induktivitäten und/oder Kapazitäten in Bezug zu den Widerständen beladungsabhängig zu- oder wegschaltet.

Dem liegt die Erkenntnis zugrunde, dass die Bremskennlinie eines permanent erregten Synchronmotors hinsichtlich der Lage und Höhe des Bremsmomentmaximums durch Variation der Lastschaltung verändert werden kann. Beispielsweise verschiebt sich das Bremsmomentmaximum mit niedrigeren Bremswiderstandswerten in Richtung kleinerer Drehzahlen, ohne sich dass hierbei jedoch der Wert des Bremsmomentmaximums ändert. Umgekehrt verschiebt sich das Bremsmomentmaximum mit größeren Bremswiderstandswerten in Richtung größerer Drehzahlen. Mit einer Parallelschaltung von Kapazitäten zu den Bremswiderständen kann man das Bremsmomentmaximum erhöhen. Demgegenüber bewirken in Reihe zu den Bremswiderständen geschaltete Induktivitäten eine Reduktion des Bremsmomentmaximums. Durch eine entsprechende Verschaltung der genannten Lastelemente kann die natürliche Bremskennlinie gemäß den jeweiligen Anforderungen folglich angepasst werden, welche sich durch Laständerungen ergeben. In der Regel bedeutet dies, dass bei größerer Beladung eine größere Bremskraft oder ein größeres Bremsmoment und bei kleinerer Beladung eine kleinere Bremskraft oder ein kleineres Bremsmoment angefordert wird.

Eine solche beladungsabhängige Variation der Lastschaltung kommt ohne aufwändige Regelung aus und ist als einfache Steuerung kostengünstig ausführbar.

Durch die in den Unteransprüchen aufgeführten Maßnahmen sind vorteilhafte Weiterbildungen und Verbesserungen der in den unabhängigen Ansprüchen angegebenen Erfindung möglich.

Eine Einrichtung zur Lastkorrektur beim generatorischen Bremsen von Schienenfahrzeugen oder Schienenfahrzeugzügen durch einen Traktionsantrieb kann generell folgende Baugruppen umfassen :
1. Eine Lasterfassungseinrichtung zur Erzeugung von beladungsabhängigen Lastsignalen,
2. eine Übertragungs- oder Steuereinrichtung zur Verarbeitung der Lastsignale und zur Aussteuerung von Stellsignalen für wenigstens
3. einen Aktor zum Umschalten oder Verstellen der Lastelemente der Lastschaltung (Widerstände, Kondensatoren und Induktivitäten) abhängig von den Lastsignalen.

Die Lasterfassungseinrichtung kann mechanische, pneumatische und auch elektrische Einrichtungen umfassen:
- Mechanische Einrichtungen wie einfederungsabhängige Gestänge. Das Lastsignal oder die Messgröße wird dann durch den Einfederungsweg oder - winkel gebildet.
- Pneumatische Einrichtungen wie kraft- bzw. druckabhängige Wiegeventile oder auch nur der Luftfederdruck in Luftfederbälgen einer Luftfederungseinrichtung des Schienenfahrzeugs. Das Lastsignal oder die Messgröße wird dann durch den Druck gebildet.
- Elektrische Einrichtungen wie einfederungsabhängige Potentiometer. Das Lastsignal oder die Messgröße wird dann durch den Widerstand, den Strom, oder die Spannung, eine Kapazität, eine Induktivität oder eine Feldstärke gebildet.

Die Art der Übertragungs- oder Steuereinrichtung richtet sich vorzugsweise nach der Gattung der Lasterfassungseinrichtung und kann :
- mechanisch, beispielsweise durch Gestänge, Hebel,
- pneumatisch, beispielsweise durch pneumatische Leitungen, Druckübersetzer, pneumatische Verstärkungsventile, oder
- elektrisch, beispielsweise durch elektrische Leitungen, Verstärker gebildet sein.

Der Aktor zum Umschalten oder Verstellen der Lastelemente kann
- für eine stufenweise Umschaltung bzw. Aufschaltung von passiven Lastelementen entsprechende Schaltelemente beinhalten, wie mechanisch oder pneumatisch betätigte Schaltkontakte, elektromechanische Schütze, elektrische/elektronische Schalter, beispielsweise Thyristoren oder Transistoren,
- für eine kontinuierliche oder stufenlose Änderung von Werten der passiven Lastelemente (Widerstände, Induktivitäten, Kapazitäten) entsprechende Stellglieder beinhalten, die beispielsweise eine Änderung der Kennwerte des magnetischen Kreises der Induktivität durch Verschieben eines Spulenkerns zur Änderung des Luftspaltes im Spulenkern oder eine Änderung der Widerstandswerte durch Schleifer hervorrufen.

Ein besonders einfacher und kostengünstiger Aufbau ergibt sich, wenn im Rahmen der Lasterfassung lediglich der in Luftfederbälgen einer Luftfederungseinrichtung des Schienenfahrzeugs oder Schienenfahrzeugzuges herrschende Balgdruck als Lastsignal herangezogen und als Stellsignal direkt in einen pneumatischen Druckschalter zum stufenweisen Umschalten bzw. Aufschalten von Lastelementen oder in einen pneumatischen Aktor zum kontinuierlichen oder stufenlosen Anpassen von Werten der passiven Lastelemente eingespeist wird. Im zweiten Fall verstellt der pneumatische Aktor beispielsweise einen oder mehrere Spulenkerne der Induktivitäten.

Zur Realisierung dieser Ausführungsform weist die Lastschaltung beispielsweise Widerstände, Induktivitäten und oder Kapazitäten auf, welche in Bezug zu den Widerständen durch den Aktor zu- oder wegschaltbar sind. Alternativ sind auch stufenlos regel- oder steuerbare Widerstände, Induktivitäten oder Kapazitäten denkbar, die durch den Aktor beladungsabhängig verstellt werden.

Gemäß einer bevorzugten Ausführungsform weist die Lastschaltung Widerstände und in Bezug zu den Widerständen in Reihe angeordnete Induktivitäten auf, wobei die Übertragungs- oder Steuereinrichtung wenigstens einen Aktor beladungsabhängig derart steuert, dass er die Induktivität mit steigender Beladung reduziert und mit sinkender Beladung steigert.

Gemäß den oben bereits beschriebenen Gesetzmäßigkeiten führt eine Steigerung einer in Reihe zu einem Bremswiderstand geschalteten Induktivität, auch von Null aus, zu einer Reduktion des Bremsmomentmaximums, während eine Reduzierung der Induktivität in einer Vergrößerung des Bremsmomentmaximums resultiert.

Scheinbar widersprüchlich schlägt die Weiterbildung der Erfindung folglich vor, bei geringer Last oder bei leerem Schienenfahrzeug mit gegenüber einem theoretisch ausnutzbaren hohen Bremsmomentmaximum niedrigeren Bremsmoment zu bremsen und das Bremsmoment durch eine Verringerung der Induktivität erst dann zu steigern, wenn das Schienenfahrzeug oder der Schienenfahrzeugzug beladen ist. Für diese Vorgehensweise spricht zum einen, dass unabhängig vom Beladungszustand eine konstante Verzögerung des Schienenfahrzeugs wünschenswert ist. Dies bedeutet im Hinblick auf die Beziehung F = m x a, dass mit sinkender Last m bei konstanter Verzögerung a die Bremskraft F reduziert werden muss, was durch die Erhöhung der Induktivität erreicht wird. Zum andern, selbst wenn man auch bei unbeladenem Schienenfahrzeug höhere Verzögerungen als bei unbeladenem Schienenfahrzeug zuließe, so erlaubt es der zwischen den Rädern und der Schiene vorliegende Haftwert, der durch Feuchtigkeit oder auf den Schienen befindliches Laub herabgesetzt wird, in Verbindung mit der dann reduzierten Normalkraft in der Regel nicht, eine entsprechend hohe Bremskraft auf die Schienen zu übertragen, ohne dass es zu von einem optimalen Schlupf abweichenden höheren Schlupf kommt. Die Fachliteratur setzt für Bremsberechnungen deshalb aus Sicherheitsgründen stets schlechte Verhältnisse mit Haftwerten von 0,10 bis 0,12, höchstens aber 0,15 an. Folglich ist der Ansatz, bei niedrig oder unbeladenem Fahrzeug mit einem gegenüber dem potentiell möglichen Bremsmoment geringeren Bremsmoment und erst bei beladenem Fahrzeug mit dem maximal möglichen Bremsmoment zu bremsen, sinnvoll.

Besonders bevorzugt beinhalten die Induktivitäten magnetische Spulen, wobei ein pneumatisch betätigter Aktor zur beladungsabhängigen Anpassung der Induktivitäten beispielsweise deren magnetischen Kreis ändert, z.B. durch stufenlose Anpassung der Position ihrer Spulenkerne.

Alternativ kann der pneumatisch betätigte Aktor durch einen vom Druck in dem wenigstens einen Luftfederbalg gesteuerten Druckschalter gebildet werden und die Induktivitäten bzw. Kapazitäten in Bezug zu den Widerständen beladungsabhängig zu- oder wegschalten.

Gemäß einer Weiterbildung bildet die auf dem permanent erregten Synchronmotor basierende generatorische Bremse eine Sicherheits- oder Notbremse, die einer Betriebsbremse als Sicherungsebene unterlegt ist. Zur Realisierung der Sicherheits- oder Notbremse kann die generatorische Bremse mit einer Sicherheitsschleife des Schienenfahrzeugs oder des Schienenfahrzeugzuges derart zusammenwirken, dass nach Über- oder Unterschreiten eines Grenzwerts durch eine entlang der Sicherheitsschleife geführten Größe der permanent erregte Synchronmotor der Lastschaltung zugeschaltet wird. Mit der Erfindung ist dann eine sehr einfache und kostengünstige Lastkorrektur der Sicherheits- oder Notbremse möglich.

### Zeichnungen

Ausführungsbeispiele der Erfindung sind in der Zeichnung dargestellt und in der nachfolgenden Beschreibung näher erläutert. In der Zeichnung zeigt :
- Fig.1: eine schematische Darstellung eines Traktionsantriebs für ein Wechselstromfahrzeug;
- Fig.2: ein allgemeines Blockschaltbild einer Einrichtung zur Lastkorrektur beim generatorischen Bremsen von Schienenfahrzeugen oder Schienenfahrzeugzügen, welchen mit einem Traktionsantrieb nach Art von Fig.1 ausgestattet sind;
- Fig.3: eine schematische Darstellung einer bevorzugten Ausführungsform der Einrichtung zur Lastkorrektur beim generatorischen Bremsen von Schienenfahrzeugen oder Schienenfahrzeugzügen,
- Fig.4: eine schematische Darstellung einer weiteren Ausführungsform der Einrichtung zur Lastkorrektur beim generatorischen Bremsen von Schienenfahrzeugen oder Schienehfahrzeugzügen..

### Beschreibung der Ausführungsbeispiele

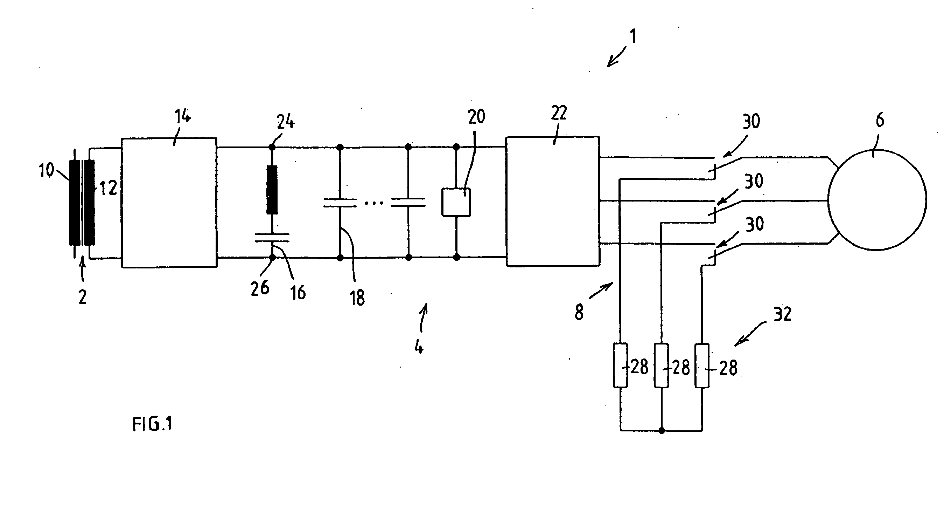

In der Fig.1 ist ein Traktionsantrieb 1 für ein Wechselstromfahrzeug, auch als AC-Schienenfahrzeug bezeichnet, näher dargestellt, wobei mit 2 ein Traktionstransformator, mit 4 ein Traktionsstromrichter, mit 6 ein permanent erregter Synchronmotor und mit 8 eine Bremseinrichtung gekennzeichnet sind. Der Traktionstransformator 2 weist eine Primärwicklung 10 und mehrere Sekundärwicklungen 12 auf, von denen hier nur eine Sekundärwicklung 12 dargestellt ist. Der Traktionsstromrichter 4 weist einen Vierquadranten-Steller 14, einen Saugkreis 16, eine Kondensatorbatterie 18, eine Überspannungs-Schutzeinrichtung 20 und einen maschinenseitigen Pulsstromrichter 22 auf. Der Vierquadranten-Steller 14 ist wechselspannungsseitig mit der Sekundärwicklung 12 des Traktionstransformators 2 verknüpft und gleichspannungsseitig elektrisch parallel geschaltet. Elektrisch parallel zu den beiden gleichspannungsseitigen Anschlüssen 24 und 26 dieser Einspeiseschaltung sind der Saugkreis 16, die Kondensatorbatterie 18, die Überspannungs-Schutzeinrichtung 20 und die gleichspannungsseitigen Eingangsanschlüsse des maschinenseitigen Pulsstromrichters 22 geschaltet. Ausgangsseitig ist der maschinenseitige Pulsstromrichter 22 mit Anschlüssen des permanent erregten Synchronmotors 6 verbindbar.

Die Bremseinrichtung 8 besteht pro Phase des permanent erregten Synchronmotors 6 aus einem Bremswiderstand 28 und einem Umschalter 30. Diese Bremswiderstände 28 sind elektrisch beispielsweise in Stern geschaltet und weisen beispielsweise jeweils einen konstanten Widerstandswert auf. Alternativ ist auch eine Dreieckschaltung denkbar. Die Umschalter 30 sind derartig mit den Ausgängen des maschinenseitigen Pulsstromrichters 22 und den Eingängen des permanent erregten Synchronmotors 6 verknüpft, dass die Eingänge des permanent erregten Synchronmotors 6 einerseits mit dem Bremswiderstand 28 und andererseits mit den Ausgängen des maschinenseitigen Pulsstromrichters 22 verbindbar sind.

Diese Umschalter 30, die auch als Fail-Safe-Schalter bezeichnet werden, können elektrisch oder mechanisch oder pneumatisch betätigt werden. Sobald diese Umschalter 30 von der Betriebsstellung "Fahren", d.h., die Klemmen des permanent erregten Synchronmotors 6 sind mit den Ausgängen des maschinenseitigen Pulsstromrichters 22 verbunden, in die Betriebsstellung "Bremsen", d.h., die Klemmen des permanent erregten Synchronmotors 6 sind mit den in Stern geschalteten Bremswiderständen 28 verbunden, gelangt, erzeugt der permanent erregte Synchronmotor 6 ein Bremsmoment, das sich mit der Verringerung der Geschwindigkeit des Schienenfahrzeugs entsprechend dem Verlauf der Bremsenkennlinie verändert. Zur Erzeugung des Bremsmoments wird weder der maschinenseitige Pulsstromrichter 22 noch irgend eine Regelung benötigt.

Ein solcher Traktionsantrieb 1 ist in der eingangs erwähnten DE 101 60 612 A1 ausführlich beschrieben. Deshalb soll hier nicht weiter darauf eingegangen werden.

Bevorzugt bildet die auf dem permanent erregten Synchronmotor basierende generatorische Bremseinrichtung 8 eine Sicherheits- oder Notbremse, die einer Betriebsbremse als Sicherungsebene unterlegt ist. Zur Realisierung der Sicherheits- oder Notbremse kann die generatorische Bremseinrichtung 8 mit einer Sicherheitsschleife des Schienenfahrzeugs oder des Schienenfahrzeugzuges derart zusammenwirken, dass nach Über- oder Unterschreiten eines Grenzwerts durch eine entlang der Sicherheitsschleife geführten Größe der permanent erregte Synchronmotor 6 der Lastschaltung zugeschaltet wird.

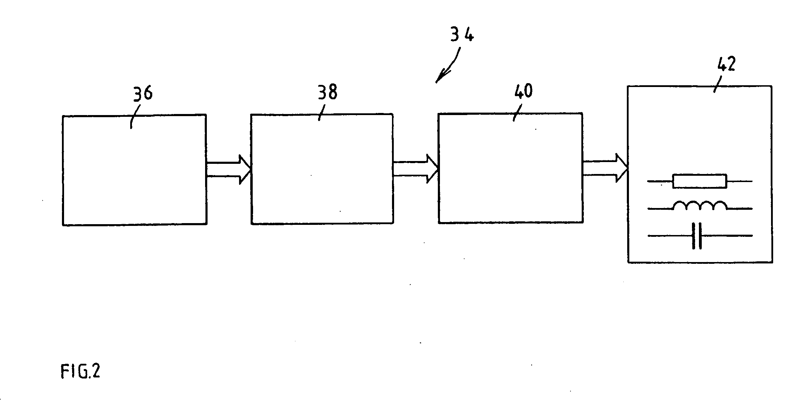

Im Unterschied zum bekannten Traktionsantrieb nach Fig.1 ist bei der Erfindung eine Einrichtung 34 zur Lastkorrektur beim generatorischen Bremsen von Schienenfahrzeugen oder Schienenfahrzeugzügen vorgesehen, welche gemäß Fig.2 generell folgende Baugruppen umfasst:
1. Eine Lasterfassungseinrichtung 36 zur Erzeugung von beladungsabhängigen Lastsignalen,
2. eine Übertragungs- oder Steuereinrichtung 38 zur Verarbeitung der Lastsignale und zur Aussteuerung von Stellsignalen für wenigstens
3. einen Aktor 40 zum Umschalten oder Verstellen von Lastelementen 42 der Lastschaltung 32 (Widerstände, Kondensatoren und Induktivitäten) abhängig von den Lastsignalen.

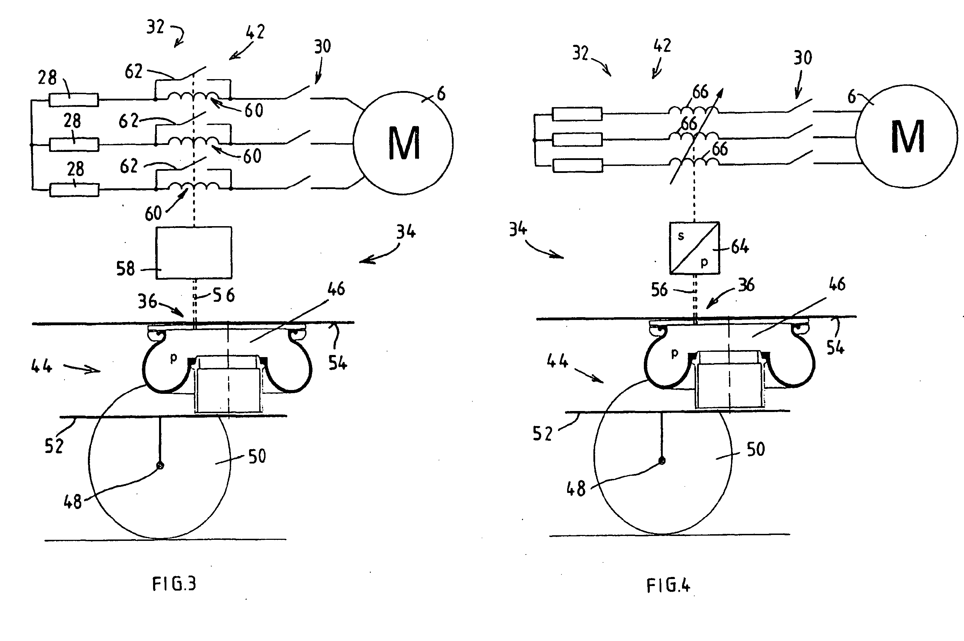

Bevorzugt wird die Einrichtung 34 zur Lastkorrektur beim generatorischen Bremsen in einem Schienenfahrzeug oder Schienenfahrzeugzug beinhaltend eine Luftfederungseinrichtung 44 mit wenigstens einem Luftfederbalg 46 eingesetzt. Eine solche Luftfederungseinrichtung 44 ist auszugsweise in Fig.3 dargestellt. Hierbei sind die an einer Achse 48 gelagerten Räder 50 beispielsweise eines Drehgestells 52 des Schienenfahrzeugs durch einen Luftfederbalg 46 gegenüber einem Wagenkasten 54 federnd gelagert. Dieser Luftfederbalg 46 sei exemplarisch für mehrere Luftfederbälge der Luftfederungseinrichtung 44 dargestellt.

In dem Luftfederbalg 46 herrscht ein beladungsabhängiger Druck p. Im Rahmen der Lasterfassung wird der im Luftfederbalg 46 herrschende Balgdruck p als Lastsignal herangezogen und über eine pneumatische Leitung 56 als Stellsignal direkt in einen pneumatischen, vorzugsweise zwei Schaltstellungen aufweisenden Druckschalter 58 als Aktor zum stufenweisen Umschalten bzw. Aufschalten von Lastelementen 42 der Lastschaltung 32 eingespeist. Die pneumatische Leitung 56 ändert, außer den unvermeidlichen Druckverlusten durch Reibung innerhalb der leitung 56, den Balgdruck p als Last- und Stellsignal nicht, so dass diese Leitung 56 eine Übertragungseinrichtung 38 im Sinne der Erfindung darstellt.

Die Lastschaltung 32 weist gemäß der Ausführungsform von Fig.1 Widerstände 28 und zusätzlich beispielsweise eine oder mehrere in Bezug zu den Widerständen 28 in Reihe angeordnete Induktivitäten 60 auf, wobei der Druckschalter 58 abhängig vom Balgdruck p derart gesteuert ist, dass dieser die Induktivität mit steigender Beladung reduziert und mit sinkender Beladung steigert. Dazu schaltet der Druckschalter 58 die Induktivitäten 60 in Bezug zu den Widerständen 28 mit sinkender Beladung zu und mit steigender Beladung weg. Denkbar ist auch ein Druckschalter 58 mit mehr als zwei Schaltstufen, welcher mehrere in Reihe zu den Widerständen 28 angeordnete Induktivitäten 60 beladungsabhängig in mehreren Stufen zu- oder wegschaltet, um das Bremsmoment lastabhängig stufenweise anzupassen.

Dazu sind die Induktivitäten 60 durch jeweils einen parallel geschalteten Überbrückungszweig 62 überbrückt. Bei Vorhandensein mehrerer Induktivitäten 60 wäre dann eine entsprechende Anzahl von Überbrückungszweigen 62 vorhanden. Bei offenem Überbrückungszweig 62 fließt der Strom durch die Induktivitäten 60, welche bei geschlossenem Umschaltzweig 60 überbrückt werden, so dass in der Lastschaltung 32 nur noch die Widerstände 28 bzw. weniger Induktivitäten 60 aktiv sind. Weiterhin ist auch eine Lastschaltung 32 denkbar, welche anstatt der Induktivitäten 60 oder zusätzlich zu diesen parallel zu den Widerständen 28 angeordnete und zu- und wegschaltbare Kapazitäten aufweist.

Eine Steigerung der Induktivität innerhalb der Lastschaltung 32, hier durch Zuschalten von Induktivitäten 60 beispielsweise von Null an, führt zu einer Reduktion des Bremsmomentmaximums, während eine Reduzierung der Induktivität in einer Vergrößerung des Bremsmomentmaximums resultiert. Bei geringer Last oder bei leerem Schienenfahrzeug wird folglich mit einem gegenüber einem theoretisch ausnutzbaren hohen Bremsmomentmaximum niedrigeren Bremsmoment gebremst, was einer ersten Schaltstellung des Druckschalters 58 entspricht, in welcher die Überbrückungszweige 62 geöffnet sind und demzufolge der Strom über die dann wirksamen Induktivitäten 60 fließt.

Demgegenüber wird das erreichbare Bremsmomentmaximum durch eine Verringerung der Induktivität gesteigert, wenn das Schienenfahrzeug oder der Schienenfahrzeugzug beladen ist, was der in Fig.3 gezeigten zweiten Schaltstellung des Druckschalters 58 entspricht, in welcher die Überbrückungszweige 62 geschlossen und die Induktivitäten 60 überbrückt sind, wobei der Strom über die Überbrückungszweige 62 fließt. In diesem Fall ist folglich die Induktivität in der Lastschaltung 32 gleich Null, wobei aber auch eine stufenweise reduzierte Induktivität durch Wegschalten einzelner Induktivitäten 60 möglich ist, wenn mehrere solcher Induktivitäten 60 in Reihe zu dem betreffenden Widerstand 28 geschaltet sind.

Gemäß einer weiteren, in Fig.4 gezeigten Ausführungsform wird im Rahmen der Lasterfassung ebenfalls der im Luftfederbalg 46 herrschende Balgdruck p als Lastsignal herangezogen und über die pneumatische Leitung 56 als Stellsignal direkt in einen pneumatischen Aktor 64 zum beladungsabhängigen stufenlosen Anpassen von ebenfalls in Reihe zu den Widerständen 28 angeordneten Induktivitäten 66 eingespeist. Um eine stufenlose Verstellung der Induktivitäten 66 zu ermöglichen, sind diese beispielsweise als magnetische Spulen ausgebildet und weisen einen mehrteiligen Spulenkern auf, wobei ein Teil des Spulenkerns durch den pneumatischen Aktor 64 gegenüber einem statischen Teil des Spulenkerns derart verstellbar ist, dass sich die lichte Weite eines zwischen den beiden Teilen des Spulenkerns befindlichen Luftspalts und damit auch die Induktivität der verändert. Somit verstellt der pneumatische Aktor 64 die Induktivität der Lastschaltung 32 beladungsabhängig und stufenlos.

Die Erfindung ist nicht auf Traktionsantriebe von Fahrzeugen beschränkt, die von einem Wechselstromkreis gespeist werden, sondern kann auch bei Traktionsantrieben von Fahrzeugen mit permanent erregten Synchronmotoren angewendet werden, die von einem Gleichstromnetz gespeist werden, wie sie beispielsweise in der DE 101 606 12 A1 beschrieben sind.

### Bezugszahlenliste

- 1: Traktionsantrieb
- 2: Traktionstransformator
- 4: Traktionsstromrichter
- 6: Synchronmotor
- 8: Bremseinrichtung
- 10: Primärwicklung
- 12: Sekundärwicklung
- 14: Vierquadranten-Steller
- 16: Saugkreis
- 18: Kondensatorbatterie
- 20: Überspannungs-Schutzeinrichtung
- 22: Pulstromrichter
- 24: Anschluss
- 26: Anschluss
- 28: Bremswiderstand
- 30: Umschalter
- 32: Lastschaltung
- 34: Einrichtung zur Lastkorrektur
- 36: Lasterfassungseinrichtung
- 38: Übertragungs- oder Steuereinrichtung
- 40: Aktor
- 42: Lastelemente
- 44: Luftfederungseinrichtung
- 46: Luftfederbalg
- 48: Achse
- 50: Rad
- 52: Drehgestell
- 54: Wagenkasten
- 56: pneumatische Leitung
- 58: Druckschalter
- 60: Induktivität
- 62: Überbrückungszweig
- 64: pneumat. Aktor
- 66: Induktivitäten

## Patentansprüche

1. Traktionsantrieb (1) zum Antreiben und zum generatorischen Bremsen eines Schienenfahrzeugs oder eines Schienenfahrzeugzuges, wobei wenigstens einer Achse des Schienenfahrzeugs oder des Schienenfahrzeugzuges wenigstens ein permanent erregter Synchronmotor (6) und ein Traktionsstromrichter (4) zugeordnet ist und wobei der Traktionsstromrichter (4) wenigstens einen maschinenseitigen Pulsstromrichter (22) aufweist und der permanent erregte Synchronmotor (6) an seinen Klemmen mit einem Umschalter (30) derart verbunden ist, dass der permanent erregte Synchronmotor (6) zum Antreiben dem Pulsstromrichter (22) oder zum generatorischen Bremsen einer eine Last bildenden Lastschaltung (32) zuschaltbar ist, wobei die dem permanent erregten Synchronmotor (6) zum generatorischen Bremsen zugeschaltete Lastschaltung (32) derart ausgebildet und/oder gesteuert ist, dass die Kenngrößen der Lastschaltung (32) abhängig von der Beladung des Schienenfahrzeugs oder des Schienenfahrzeugzuges veränderbar sind, wobei die Lastschaltung (32) Widerstände (28) und Induktivitäten (60; 66) und/oder Kapazitäten aufweist, **dadurch gekennzeichnet, dass** ein Aktor (40) eine Schalteinrichtung (58, 62) beinhaltet, welche die Induktivitäten (60) und/oder Kapazitäten in Bezug zu den Widerständen (28) beladungsabhängig zu- oder wegschaltet.

2. Traktionsantrieb nach Anspruch 1, **dadurch gekennzeichnet, dass** die Änderung von Widerstand, Induktivität oder Kapazität gestuft oder stufenlos erfolgt.

3. Traktionsantrieb nach Anspruch 1 oder 2, **dadurch gekennzeichnet, dass** die Lastschaltung (32) in Bezug zu den Widerständen (28) in Reihe angeordnete Induktivitäten (60; 66) aufweist, wobei eine Übertragungs- oder Steuereinrichtung (38, 56) den Aktor (58; 64) beladungsabhängig derart steuert, dass er die Induktivität der Lastschaltung (32) mit steigender Beladung reduziert und mit sinkender Beladung steigert.

4. Traktionsantrieb nach Anspruch 3, **dadurch gekennzeichnet, dass** die Schalteinrichtung (58, 62) Mittel zur Überbrückung der Induktivitäten (60) aufweist.

5. Traktionsantrieb nach Anspruch 4, **dadurch gekennzeichnet, dass** die Induktivitäten (66) magnetische Spulen beinhalten und der Aktor (64) die Induktivitäten (66) durch Änderung des magnetischen Kreises beladungsabhängig stufenlos verstellt.

6. Traktionsantrieb nach wenigstens einem der vorhergehenden Ansprüche, **dadurch gekennzeichnet, dass** die auf dem permanent erregten Synchronmotor (6) basierende generatorische Bremse eine Sicherheits- oder Notbremse bildet, die einer Betriebsbremse als Sicherungsebene unterlegt ist.

7. Einrichtung (34) zur Lastkorrektur beim generatorischen Bremsen von eine Luftfederungseinrichtung (44) mit wenigstens einem Luftfederbalg (46) beinhaltenden Schienenfahrzeugen oder Schienenfahrzeugzügen durch einen Traktionsantrieb (1) nach wenigstens einem der vorhergehenden Ansprüche, **dadurch gekennzeichnet, dass** der Aktor (58; 64) durch einen pneumatischen Aktor gebildet wird, welcher durch den Druck (p) in dem wenigstens einen Luftfederbalg (46) direkt gesteuert ist und abhängig von diesem Druck (p) die Induktivitäten (60; 66) und/oder Kapazitäten in Bezug zu den Widerständen (28) beladungsabhängig zu- oder wegschaltet oder stufenlos verstellt.

8. Einrichtung zur Lastkorrektur nach Anspruch 7, **dadurch gekennzeichnet, dass** der pneumatische Aktor durch einen vom Druck (p) in dem wenigstens einen Luftfederbalg (46) gesteuerten Druckschalter (58) gebildet wird.

9. Einrichtung zur Lastkorrektur nach Anspruch 8, **dadurch gekennzeichnet, dass** der pneumatische Aktor (64) den magnetischen Kreis der Induktivitäten (66) beladungsabhängig stufenlos verstellt.

10. Einrichtung zur Lastkorrektur nach Anspruch 9, **dadurch gekennzeichnet, dass** der pneumatische Aktor (64) die Größe eines Luftspalts zwischen Spulenkernteilen von Spulenkemen der Induktivitäten (66) beladungsabhängig stufenlos verstellt.

## Claims

1. Traction drive (1) for driving and for performing regenerative braking of a rail vehicle or a combination of rail vehicles, wherein at least one permanently excited synchronous motor (6) and one traction current converter (4) are assigned to at least one axle of the rail vehicle or of the combination of rail vehicles and wherein the traction current converter (4) comprises at least one machine-side pulse current converter (22) and the permanently excited synchronous motor (6) is connected at its terminals to a changeover switch (30) in such a way that the permanently excited synchronous motor (6) can be connected to the pulse current converter (22) for driving or to a load circuit (32) representing a load for regenerative braking, wherein the load circuit (32) connected to the permanently excited synchronous motor (6) for regenerative braking is designed and/or controlled such that the characteristic variables of the load circuit (32) can be changed as a function of the loading of the rail vehicle or the combination of rail vehicles, wherein the load circuit (32) comprises resistors (28) and inductors (60; 66) and/or capacitors, **characterised in that** an actuator (40) includes a switching device (58, 62) which connects or disconnects the inductors (60) and/or the capacitors relative to or from the resistors (28) as a function of loading.

2. Traction drive according to claim 1, **characterised in that** the changing of the resistance, inductance or capacitance takes place in an incremental or infinitely variable manner.

3. Traction drive according to claim 1 or 2, **characterised in that** the load circuit (32) includes inductors (60; 66) arranged in series with respect to the resistors (28), wherein a transmission or control device (38,56) controls the actuator (58; 64) as a function of loading in such a way that it reduces the inductance of the load circuit (32) as the loading increases while increasing it as the loading decreases.

4. Traction drive according to claim 3, **characterised in that** the switching device (58, 62) is provided with means for bypassing the inductors (60).

5. Traction drive according to claim 4, **characterised in that** the inductors (66) contain magnetic coils and **in that** the actuator (64) adjusts the inductors (66) in an infinitely variable manner by changing the magnetic circuit as a function of loading.

6. Traction drive according to one or more of the preceding claims, **characterised in that** the regenerative brake based on the permanently excited synchronous motor (6) forms a safety or emergency brake which is subordinate to a service brake as a protection level.

7. Device (34) for load correction during the regenerative braking of rail vehicles or combinations of rail vehicles containing an air spring device (44) with at least one air spring bellows (46) by means of a traction drive (1) according to one or more of the preceding claims, **characterised in that** the actuator (58; 64) is represented by a pneumatic actuator which is controlled directly by the pressure (p) in the at least one air spring bellows (46) and which connects or disconnects or adjusts in an infinitely variable manner the inductors (60; 66) and/or the capacitors with respect to the resistors (28) in dependence on this pressure (p).

8. Device for load correction according to claim 7, **characterised in that** the pneumatic actuator is represented by a pressure switch (58) controlled by the pressure (p) in the at least one air spring bellows (58).

9. Device for load correction according to claim 8, **characterised in that** the pneumatic actuator (64) adjusts the magnetic circuit of the inductors (66) in an infinitely variable manner as a function of loading.

10. Device for load correction according to claim 9, **characterised in that** the pneumatic actuator (64) adjusts the size of the air gap between coil core parts of coil cores of the inductors (66) in an infinitely variable manner as a function of loading.

## Revendications

1. Entraînement (1) par traction pour entraîner et freiner en génératrice un véhicule ferroviaire ou un train de véhicules ferroviaires, dans lequel au moins un moteur (6) synchrone à excitation permanente et un convertisseur (4) de traction sont associés à au moins un essieu du véhicule ferroviaire ou du train de véhicules ferroviaires et dans lequel le convertisseur (4) de traction a au moins un convertisseur (22) à impulsions côté machine et le moteur (6) synchrone à excitation permanente est relié sur ses bornes à un commutateur (30) de manière à ce que le moteur (6) synchrone à excitation permanente puisse être connecté pour l'entraînement au convertisseur (22) à impulsions ou pour le freinage en génératrice à un circuit (32) de charge formant une charge, dans lequel le circuit (32) de charge pouvant être branché au moteur (6) synchrone à excitation permanente pour le freinage en génératrice est constitué et /ou est commandé de façon à ce que les grandeurs caractéristiques du circuit (32) de charge puisse être modifiées en fonction de la charge du véhicule ferroviaire ou du train de véhicules ferroviaires, le circuit (32) de charge ayant des résistances et des inductances (60, 66) et/ou des capacités, **caractérisé en ce qu'**un actionneur (40) comporte un dispositif (58, 62) de commutation qui connecte ou déconnecte les inductances (60) et/ou les capacités par rapport aux résistances (28) en fonction de la charge.

2. Entraînement par traction suivant la revendication 1,
**caractérisé en ce que** la Variation de la résistance de l'inductance ou de la capacité s'effectue par palier ou d'une manière continue.

3. Entraînement par traction suivant la revendication 1 ou 2, **caractérisé en ce que** le circuit (32) de charge a des inductances (60, 66) montées en série par rapport aux résistances (28), un dispositif (38, 56) de transmission ou de commande commandant l'actionneur (58, 64) en fonction de la charge, de façon à ce qu'il réduise l'inductance du circuit (32) de charge lorsque la charge augmente et l'augmente lorsque la charge diminue.

4. Entraînement par traction suivant la revendication 3,
**caractérisé en ce que** le dispositif (58, 62) de commande a des moyens pour court-circuiter les inductances (60).

5. Entraînement par traction suivant la revendication 4,
**caractérisé en ce que** les inductances (66) comportent des bobines magnétiques et l'actionneur (64) règle en continu en fonction de la charge les inductances (66) en modifiant le circuit magnétique.

6. Entraînement par traction suivant au moins l'une des revendications précédentes, **caractérisé en ce que** le frein en génératrice reposant sur le moteur (6) synchrone à excitation permanente forme un frein de sécurité ou d'urgence subordonné hiérarchiquement en tant que plan de sécurité à un frein de service.

7. Dispositif (34) de correction de charge lors du freinage en génératrice d'un véhicule ferroviaire ou d'un train de véhicules ferroviaires portant un dispositif (44) de suspension pneumatique ayant au moins un soufflet (46) à coussin d'air par un entraînement (1) par traction suivant au moins l'une des revendications précédentes, **caractérisé en ce que** l'actionneur (58, 64) est formé par un actionneur pneumatique, qui est commandé directement parla pression (p) dans le au moins un soufflet (46) à coussin d'air et qui connecte ou déconnecte ou règle en continu, en fonction de la charge et en fonction de cette pression (p), des inductances (60, 66) et/ou des capacités par rapport aux résistances (28).

8. Dispositif de correction de charge suivant la revendication 7, **caractérisé en ce que** l'actionneur pneumatique est formé par un manocontacteur (58) commandé par la pression (p) dans le au moins un soufflet (46) à coussin d'air.

9. Dispositif de correction de charge suivant la revendication 8, **caractérisé en ce que** l'actionneur (64) pneumatique règle en continu en fonction de la charge les circuits magnétiques des inductances (66).

10. Dispositif de correction de charge suivant la revendication 9, **caractérisé en ce que** l'actionneur (64) pneumatique règle en continu en fonction de la charge la dimension de l'entrefer entre des parties de noyaux de bobines des inductances (66).
